(19)

Europäisches
Patentamt
European
Patent Office
Office européen
des brevets

(11) **EP 3 839 917 A1**

(12) **EUROPEAN PATENT APPLICATION**

(43) Date of publication:
**23.06.2021 Bulletin 2021/25**

(21) Application number: **19383132.8**

(22) Date of filing: **18.12.2019**

(51) Int Cl.:
*G08G 1/01* (2006.01)     *G06N 20/00* (2019.01)
*H04W 4/00* (2018.01)     *H04W 64/00* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **TELEFÓNICA IOT & BIG DATA TECH,
S.A.**
**28050 Madrid (ES)**

(72) Inventor: **Frias-Martinez, Enrique**
**28013 Madrid (ES)**

(74) Representative: **Carlos Hernando, Borja**
**Garrigues IP, S.L.P.**
**Hermosilla, 3**
**28001 Madrid (ES)**

(54) **METHOD, SYSTEM AND COMPUTER PROGRAMS FOR TRAFFIC ESTIMATION USING PASSIVE NETWORK DATA**

(57)     A computer implemented method and system for traffic estimation using passive network data. A first computer obtains a first group of information regarding passive cell-phone network data of users; obtains a second group of information regarding traffic metrics of links of a roadway system obtained as different time series for each of said links; overlaps the first group of information with the second group of information, providing an overlapped map; identifies, on said overlapped map, an area of coverage of each of the links in view of BTSs providing coverage to the links and computing an envelope of each link; computes a mathematical model defining a flow and average speed of each of the links by identifying the number of users that are travelling by car through said envelope of the link in that specified period of time; and updates the computed mathematical model through a machine learning model.

**FIG. 2**

**Description**

Technical Field

The present invention is directed to a method and corresponding system for the estimation of traffic flow and average speed of the links of a roadway system using passive network data, particularly network-driven cell phone data.

Background of the Invention

Traffic Flow and average speed are the main metrics to measure traffic. Flow (traffic flow) is defined as the number of vehicles passing a reference point per unit of time, and is typically measured in vehicles per hour. Average speed is the average speed of all cars considered for the flow when passing for a given point in the road network. Speed and flow time are fundamental measurements of a highway's traffic performance and speed is a key variable in the design of roadway facilities. Estimating traffic flow and average speed can be done with a variety of techniques and sensors, such as cameras, toll information, road sensors, etc. each one suffering from a number of limitations, mainly the cost of deploying such sensors - which as a result causes that they are usually only deployed in the sensitive parts of the network. Usually, values for flow and average speed are only available for a reduced part of the network, or if they are available for the whole road network they are based on approximations.

There exist a variety of data sources generated by cell phones that can be used to obtain traffic flow and speed, such GPS [8, 10], querying the network for information, or cell phone traces (CDRs) and/or handovers [1] that use cell phones as a probe for traffic. The method presented in [11] considers information obtained from querying the network- and as a result can only work by defining a predefined geographical area and a set of demographic characteristics in order to avoid affecting the QoS of the network.

In any case in the background there are also studies that focus on using passive information [2-7]. In [4] there is disclosed a method that uses information provided on real time by a cell phone network to construct lists of vehicles traveling on various road sections and traffic loads at particular road sections, for real time functioning of Intelligent Transportation System. Similarly [5] presents a method to measure traffic flow and speed using the location of cell phones. In this approach, the data analyzed for traffic monitoring is predominantly derived from the mobile telephones of the users that are travelling, and have therefore requested traffic information. While this solves largely the problem of identifying cell phones in cars it also highly limits the information available for the estimations. In [6] there is disclosed a method to estimate traffic speed and flow using the signaling of a cell phone network feeding the information into a map. In [7] traffic flow is obtained from cell phone signals by modeling the changes of cell phones from one cell phone to another and eliminating in the process possible outliers. The method also considers a mechanism to send the information to the users in the car.

Thus, in the related background there are a variety of data sources used to calculate traffic flow, mainly GPS, CDRs (active cell phone network data), and passive information data. The first two approaches (GPS and CDR) suffer from the limitations of the corresponding datasets. In the case of GPS the systems need the active participation of the users to use the information of the GPS to derive the traffic data, which limits the quantity of the data available. In the case of CDRs, the information is sparser and as a result the traffic data derived from it has a low quality.

The use of passive data partially solves the previous problems, while it is much denser that CDR data, it does not require the active participation of users and as a result the amount of data available is considerable higher. References [5][6][7], although they present a similar problem to the present invention and use the same data source (passive network data), they suffer the same main limitation: by using passive network data from one operator they just see part of the actual number of cars moving in each road link- that number being represented by the penetration rate of the telco operator used to obtain average speed and flow. Although that number can capture the general trend of the flow it is usually very different from the actual value. On the contrary, in present invention, once the flow and speed provided by the data from the cell phone network have been identified, a machine learning algorithm combines those results with the data provided by the transportation agency/institution. In this context, the data provided by the transportation agency is used as the ground truth to train a machine learning system that transform the observed data into the final flow and average speed for each link of the road.

Also, the approaches presented in the state of the art typically focus on identifying road congestion in order to raise traffic alerts, and they present a method to use that information into the traffic managing application.

New methods and systems for traffic estimation using passive network data are therefore needed.

References:

**EP 3 839 917 A1**

[1] C.-Y. Chiang and et al. Estimating instant traffic information by identifying handover patterns of UMTS signals. In Intelligence Transportation Systems, 14th Int. IEEE Conf., pages 390-395, 2011.

[2] A. Janecek and et al. Cellular data meet vehicular traffic theory: location area updates and cell transitions for travel time estimation. In Proceedings of the 2012 ACM Conference on Ubiquitous Computing, pages 361-370. ACM, 2012.

[3] D. Valerio and et al. Road traffic estimation from cellular network monitoring: a hands-on investigation. In Personal, Indoor and Mobile Radio Communications, 2009 IEEE 20th International Symposium on, pages 3035-3039. IEEE, 2009.

[4] US6577946B2, "Traffic information gathering via cellular phone networks for intelligent transportation systems".

[5] GB2369709A, "System and method of traffic flow measurement using locations of mobile phones".

[6] CN1596425A, "Using cellular network to estimate traffic flow".

[7] CN104835320B, "A traffic flow estimation method based on the mobile data communication".

[8] CN101286269A, "Traffic flow forecasting system combining dynamic real time traffic data".

[9] Hall, F. L. (1996). Traffic stream characteristics. Traffic Flow Theory. US Federal Highway Administration, 36.

[10] US7650227B2 "System for using cellular phones as traffic probes".

[11] US8494496B2 "System and method for using cellular network components to derive traffic information".

Description of the Invention

To that end, present invention proposes, according to one aspect, a computer implemented method for traffic estimation using passive network data.

The method comprises obtaining, by a first computer, for a specified period of time, a first group of information regarding passive cell-phone network data of a plurality of users over a cell-phone network, said passive network data being obtained from a plurality of base transceiver stations (BTSs) providing coverage to said cell-phone network; obtaining, by the first computer, from a second computer of a transportation institution, for said specified period of time, a second group of information regarding traffic metrics of several links of a roadway system, said second group of information being obtained as different time series for each of said links; overlapping, by the first computer, the first group of information with the second group of information, providing an overlapped map; identifying, by the first computer, on said overlapped map, an area of coverage of each of the links in view of the BTSs that provide coverage to the links and computing an envelope of each link based on the areas of coverage crossed by the link; computing, by the first computer, a mathematical model defining a flow and average speed of each of the links by identifying the number of users of the plurality of users that are travelling by car through said envelope of the link in that specified period of time; and updating, by the first computer, the computed mathematical model based on the obtained second group of information through a machine learning model.

According to the proposed method, particularly, the specified period of time comprises at least one day and the passive cell-phone network data comprises a set of network-driven cell-phone network data events each one including an identifier of the BTS and a timestamp.

In an embodiment, the computing of the flow and average speed comprises computing transitions between two different coverage areas using the BTSs of each coverage area and a time at which the users move between the two coverage areas.

Moreover, the first computer can further eliminate linear parallel interference cancellation effects, such as the ping-pong effect, occurring in the transitions by considering a minimum time interval defining a movement not possible for a human due to the speed and by ignoring the transitions lower than said minimum time interval.

In an embodiment, the identification of the number of users travelling by car is performed by computing a total distance traveled by the users as the sum of the distance between the pairs of BTSs of each transition, and verifying that the total distance is above a distance threshold; and by computing the speed of the users as the quotient between the distance from a first BTS of said pair to a second BTS of said pair and the time taken to travel said distance, and verifying that the computed speed is comprised between a max and min speed range.

Particularly, a direction of the transitions is also identified by the first computer computing an angle defined by the transitions between BTSs and the link according to the following formula: $\theta = \arctan\frac{m1-m2}{1+m1m2}$, where $m1$ is the slope of the BTS transition and m2 is the slope of the link. Then, the first computer verifies that the computed angle is below a maximum acceptable angle.

Likewise, an intermediate point between the pair of BTSs of each transition is also identified. Then, a percentage of the distance between a first BTS and the intermediate point when compared to the first BTS and a second BTS is computed as: $R = \frac{d(BTS1,P)}{d(BTS1,BTS2)}$. The computed percentage is used to compute a time in which the identified users pass through the intermediate point; and an index value is computed by discretizing the computed time to a given time window and adding the computed index value to each transition. In an embodiment the time given is comprised between 5 and 20 minutes.

The machine learning model may be a square fitting model, a neural network, a support vector machine, a k-nn regression model minimizing a Root Mean Square Error of the computed mathematical model, etc.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The invention allows predicting flow and average speed for the part of the network that is not sensorized or for which the quality of the information is low. The network needed to obtain the raw data is already deployed (BTS towers) so there is no need to deploy or maintain any extra sensors.

The invention also allows deploying applications based on traffic information for which no real time traffic information is available.

The data can be processed very fast and if the network data is available on real time, calculating flow and average speed can also be done in real time.

The invention has a mechanism to correct the partial view caused by using just one telecommunication provider. By using a machine learning approach the method corrects the extra filtering and the information that could have been provided by other telco providers

The data provided by transportation agencies has a variety of quality labels associated to it. The invention only considers the maximum level of trust to train the machine learning system. As a result, the invention can also correct the original data with low quality.

Brief Description of the Drawings

The previous and other advantages and features will be more fully understood from the following detailed description of embodiments, with reference to the attached figures, which must be considered in an illustrative and non-limiting manner, in which:

Fig. 1 illustrates an example of a highway network divided in links. The points indicate the beginning of one link and the end of another. In black, the Voronoi approximation of the area of coverage of each cell phone tower.

Fig. 2 is an example of the application of elimination of the ping-pong effect to the data pairs according to an embodiment. Black points are BTS towers; lines indicate a change from one tower to the next. (a) Original set of data pairs with two ping pongs between towers (B, C) and (D, E) and (b) final mobility from the network perspective after the elimination of the ping pong effect.

Fig. 3 is an example of the envelope generated by a road link defined by (x1, y1) and (x2, y2) and a transition from BTS1 to BTS2. In this case, both Voronoi cells defined by BTS1 and BTS2 are not part of the convex hull of the road link.

Fig. 4 illustrates an example of estimation of time from the transactions defined by C1 and C2, being i the intermediate point of the crossing of the envelope.

Fig. 5 (left) shows an example of linear regression fit between the actual flow (Y axis) and the flow obtained with the method ($f_{count}$). On the right the linear function obtained is then applied to obtain the final flow per link per unit of time for 10 links.

Detailed Description of Preferred Embodiments

Present invention provides a method, implemented by a computer, having at least one memory and a processing unit, and system for the estimation of traffic, particularly flow and average speed, of the links of a roadway system using network-driven cell phone data. Two datasets are considered: passive cell-phone data and information provided by a corresponding highway and transportation institution (through a computer thereof). The invention identifies cell phone users that are traveling by car and using a machine learning approach, produces a mathematical model to estimate/compute flow and average speed for road links.

Passive (or Network-driven) cell-phone network data captures periodic location information of cell phones triggered by updates requested by the network, while event-driven cell-phone network data refers to location information collected when a service is actively requested by the user. In general event-driven cell-phone location data is a subset of network-driven data, because as a part of those active services there are elements triggered by the network.

Transportation agencies deploy sensors on the road network in order to have information about speed and flow per link of the road. The information is given in the form of a temporal series per link that represent for each day the average speed and flow. Typically, these sensors are only deployed in the part of the network that is more sensitive and for the rest there is no information or the information is of a lower quality.

In roads and highways a link is defined as the road between two junctions, i.e. the length of road in which a car does not have an exit. Each links comprises only one direction although it includes all the lanes in that direction, i.e. a highway system will have two links between two junctions, one for each direction, both of them presenting information for a set of lanes.

Flow is defined as the number of vehicles passing a reference point per unit of time, and is typically measured in vehicles per hour. The beginning of the link is usually considered as the reference point for counting the number of cars. Flow is given for each link and for each direction and for a given time interval, typically in the area of 5 to 15 minutes. Flow rates are collected directly through point measurements, and by definition require measurement over time. They cannot be estimated from a single snapshot of a length of road. In general, flow rate, q, is the number of vehicles counted N, divided by the elapsed time, T in a given link of a road: $q=N/T$.

Average Speed or Time-mean-speed (TMS) is calculated from the individual speed recorded for vehicles passing a point over a selected period. Average speed is given for each link for a given time interval, typically in the area of 5 to 15 minutes. Average speed is measured at a reference point on the road over a period of time typically using loop detectors. Loop detectors, when spread over a reference area, can identify each vehicle and can track its speed. However, average speed measurements obtained from this method are not accurate because instantaneous speeds averaged over several vehicles do not account for the difference in travel time for the vehicles that are traveling at different speeds over the same distance. Also, when dealing with average speed it is common that more than the actual value what is relevant is in which range the average speed is, like low [0-40[ [40-80][80-120] as an indication of the level of congestion.

Convex hull or the envelope of a link is defined as the smallest convex set of Voronoi cells constructed from the set of BTSs of the network that define the coverage areas that contain that link.

Flow and average speed are both the main indicators of traffic. Average speed is used as an indicator of traffic congestion level as, when compared to the speed limit, lower speeds are indicators of high traffic and high speeds of low traffic density. Flow also represents a similar concept with low values indicating low traffic density and vice versa although it is not such a direct implication as in the case of average speed. Speed-flow models are important for freeway management strategies, and are of fundamental importance for alternate routing; hence there are a variety models in the literature that present the relationship between flow y average speed ([see 9] for an example). Last, it needs to be considered that traffic streams are not uniform, but vary over both space and time. Because of that, measurement of the variables of interest for traffic theory, such as flow and average speed, is in fact the sampling of a random variable. In reality, the traffic characteristics are parameters of statistical distributions, not absolute numbers.

As indicated above, the invention uses two different datasets: passive network data and traffic metrics including flow and average speed information provided by a transportation agency/ institution for part or the total road system.

In order to calculate the flow and average speed of the links of a road infrastructure present invention uses passive information extracted from cell phone networks. Cell phone networks are built using base transceiver stations (BTSs) that are in charge of communicating cell phones with the network. A given geographical region will be serviced by a set of BTSs $BTS = \{bts_1...bts_N\}$, each one characterized by its geographical coordinates (latitude, longitude). For simplicity, it is typically assumed that the area of coverage of each BTS can be approximated by a 2-dimensional nonoverlapping polygon, and approximate it using Voronoi tessellation. This approach gives a good approximation of the coverage area of each BTS. In practice, to build the "real" diagram of coverage, one has to consider several factors in the mobile network, including the power and orientation of each antenna. To optimize signaling, BTSs are grouped in Location Area Networks (LACs), which typically contain multiple BTSs, ranging from 10 to more than 100, depending on the communication needs. LACs help determine the current location of a mobile phone within a cellular network without having to go down to the BTS level. Traditionally, the information generated by event-driven cell-phone network data has been referred to as Call detail records (CDRs) as it stores the information needed for invoicing purposes. CDRs have two inherent limitations: location is captured only when a service takes place (i.e., low resolution), and the captured location approximates the actual position (i.e., coarse granularity). Network-driven cell phone-network data solves the first limitation while stills suffer from the second one.

A cellular network needs to be aware of where cell phones are located in order to provide services (e.g., routing calls, delivering SMS, etc.). For this purpose, network events are generated to update the location of the cell phones. Network-driven cell-phone network data (NDCND) is generated by events triggered by the network or the cell-phone, where the user did not necessarily requested any services. As a result, there is an entry for each event of the network, with its associated timestamp and the BTS that handled it, which gives an indication of the geographical location of the mobile phone at a given moment in time. Note that no information about the position of a cell phone within a cell is known. The set of fields typically contained include: type of event; encrypted phone number that triggered the event; identifier of the BTS that handled the event; date and time of the call; and duration of the call. A network-event database will also contain tables that associate the identifier of the event with the event and the error codes with the description of the errors.

Typically, there are three main types of events that the network captures. Note that different network providers capture all or only a subset of this information, depending on the infrastructure deployed on the network:

- *Changing LACs*: When a cell phone changes a LAC automatically generates an update in the network with the new LAC area in order to be able to reroute the calls/services correctly. Part of the information generated includes the BTS used to enter the LAC - which provides an indication of the location.
- *Switching the phone on and off*: in this case, the BTS where the phone was last connected is registered.
- *Periodic location update request (paging)*: if none of the above took place in the last few hours, a location request will be issued which will register the identifier of the BTS and the corresponding LAC that the mobile phone is connected to. The time parameter is typically between 2 and 4 h, i.e., if the network lacks information from the phone for the last 2-4 h, a location request will be issued.

Finally, making or receiving calls or SMS, and the handover between BTS during a call, also generate an update in the network, which is also captured and included as network-driven data. In this case, and contrasting with CDRs, the event only generates the location of the phone and the date and time, with no information about the other side of the interaction (i.e., the other cell phone) or its location. As a result, the location information contained in network-driven datasets is much denser than when only considering CDR information, but cannot be used to derive social variables.

Additionally, present invention also uses traffic metrics provided by transportation agencies/highway agencies. In general, these institutions divide the corresponding road network in links. For each link (or for a subset of the available links) they provide a set of traffic metrics obtained from one or more of the sensors available in the each link, typically cameras, road tolls and in-vehicle GPS. Not all links have all types of sensors, and some of the links do not have any sensors and the information provided (if any) is just an estimation. The main metrics are flow and average speed in each link for a given time window typically in the range of 5 to 20 minutes. This information is usually provided for each individual day or can be given as an average of a set or type of day that will depend on the infrastructure available to obtain them. Flow value is estimated for every time window as the average number of cars per minute at a given link during that time interval. Average speed is estimated for every time window as the average of the speed of every car when entering the corresponding link. In general, the information is available only for part of the road network and also has different levels of quality. Usually there is an indication of the quality of the information provided for each link (for example a number between 1 and 3, when 1=maximum trust in the value; 2= medium trust in the value and 3=low trust in the value. This quality indicator shows the level of trust of the traffic information provider and depends of the spatial match between the links and the sensors available.

The combination of both datasets allows the invention to obtain the flow and average speed in the road network. While NCCDN provides the information to obtain the raw flow and average speed values in each link, the agency data is used as ground truth to train the machine learning mechanism that corrects the raw flow provided by NCCDN. This is a key element as NCCDN just considers the information provided by one cell phone provider which highly limits the quality of the results. In order to do that both datasets need to overlap, i.e. NDCND data will typically be a set of consecutive days (at least of one day), and the flow and average speed per link for the road network provided by the corresponding highway agency should have been measured during that same set of days. The method can be applied however required and create a model for each day of the week (Monday through Sunday) or for each day of the month, depending on the information available and for what the model will be applied.

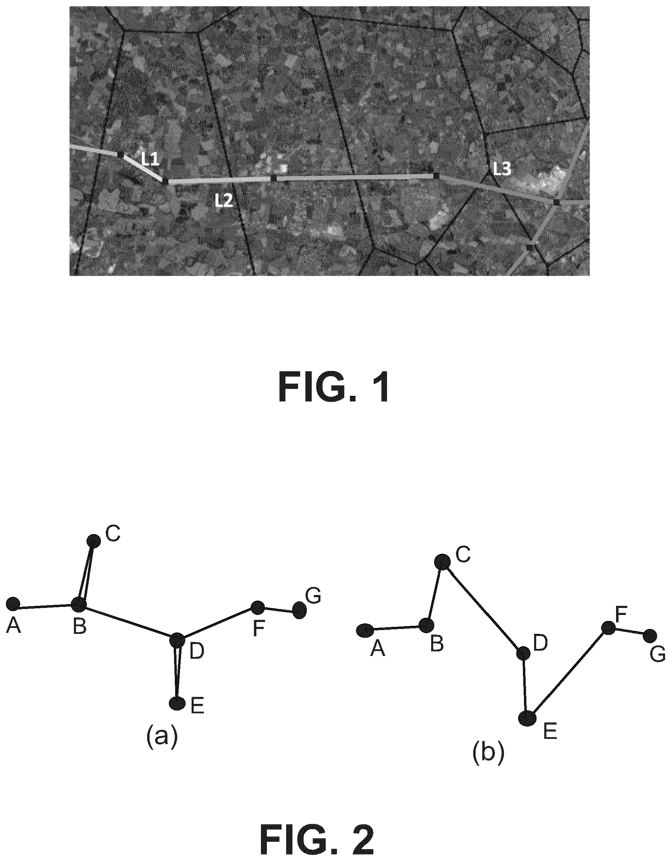

The previous two datasets have different spatial granularities, while the cell-phone data considers cell phone towers (and their coverage), road information is presented as a time series for each link in the road network. Hence, to approximate flow and average speed from passive cell-phone data, the invention first merges the geographies of the two data sources by overlapping them. Fig. 1 overlaps datasets, one containing links and the other the Voronoi cells defined by the BTSs of the telecommunication network. In Fig. 1 it can be observed how a link usually expands over a number of tower coverage areas (cells). Thus, the invention first associates BTSs (cells) to road links by identifying the areas of coverage that intersects with each link. In general, three situations can be identified:

    1. The link is completely embedded in just one Voronoi cell (like link L1 in Fig. 1)
    2. The link crosses two Voronoi cells (like link L2 in Fig. 1)
    3. The link crosses three or more Voronoi cells (like link L3 in Fig. 1). Theoretically, it could be possible for a link to cross more than three cells and the method will work exactly the same.

The fact that one link is partially or totally included in the area of coverage of a BTS tower (cell) does not imply than other (multiple) links are also included in that particular cell. In any case, for each set of cells covering a given link, the invention computes the convex hull of the link with the corresponding Voronoi cells, and refers to it as the envelope of the link. The convex hull of a link is obtained as spatially adding the corresponding areas of coverage of the cells crossed by the link. As a result the envelops of the different links can overlap. Each envelope is then characterized by the coordinates of its vertices $(x_1,y_1),(x_2,y_2),...,(x_n,y_n)$.

To obtain flow and average speed from NCDCN, given a set of $BTS=(bts_1;bts_2; ...;bts_N)$ that gives coverage to a region R characterized by its Voronoi tessellation R = $(V_1, V_2, .., V_N)$, a set $\varepsilon=\{\theta_1, ...,e_N\}$ of n NDCND events generated by user user_d, and a set of users USERS of the telecommunication network; and given a set of links in which a road network is divided, L=$\{L_1,..., L_m\}$, their associated envelopes as defined in the previous section E=$\{E_1,..., E_m\}$, and the temporal series of flow F and average speed AS associated to a subset or all the links in L for a set of days, F=$\{F_1,...,F_b\}$ with b>1 and b$\leq$m and AS=$\{AS_1,...,AS_b\}$; and $F_i$=$\{F_{i,1}, ..., F_{i,d}\}$ with $i$=1...b and $AS_i$=$\{AS_{i,1}, ..., AS_{i,d}\}$, with d the number of days for which the series are available, the invention presets a technique to obtain a mathematical model that defines the temporal series of flow $F_{NDCNC}$ and average speed $AS_{NDCNC}$ for all links in L obtained from NDCNC. In general, to obtain the raw traffic flow and average speed of a link during a specific time interval, the proposed method focusses on identifying the number of users that are traveling by car through the envelope of the link in that period of time. After that a machine learning approach is taken to transform the observed flow and average speed into the actual flow and average speed.

A road network is usually comprised of different types of links, mainly single-way and dual way roads (one line per direction) and highways. The method proposed should be applied independently for each group: it is applied for roads with a set of parameters and for highways with a different set of parameters. For each group will generate different mathematical models for F and AS. The density and characteristics of the mobility in roads and highways justifies the independent application of the method in each case and the need to have different mathematical models.

It is assumed that at least one day of NDCND is available and the same day is available for each link (or for a given subset of links) of the road network providing flow and average speed per link for that day. The model can be applied if the datasets have other characteristics, but in any case will be reduced to one or more than one combination (possible averaged) of one day of NDCND and the corresponding day of Flow and Average Speed.

The proposed method may have to executed some or all of the following steps for calculating flow and average speed: compute all transitions T; eliminate linear parallel interference cancellation effects such as the ping-pong effect; calculate total distance travelled; calculate transition speed; identify transitions over envelopes of links; identify direction of the transition; identify time window; update flow and average speed; flow and average speed regression; and parameter recommendation.

In the following subsections, each one of the previous steps that can be executed by the proposed method are detailed.

• Compute set of transitions T.-

For each user_id of the set of users the invention considers the set of NDCND events generated during a day, $\varepsilon$=$\{e_1, ...,e_N\}$, where each e contains (BTS, t): the time(t) and the location(BTS) of the event for user_id. From $\varepsilon$ the method computes the set of transitions T per user_id as the pairs (BTS$_1$, BTS$_2$) of cell transitions and the time $(t_1, t_2)$ when user_id move between those two cells. The set of transitions T contains the raw information necessary to compute flow and average speed. Algorithm 1 presents the steps for constructing the set of transitions for all users.

```
Algorithm 1: COMPUTATION OF TRASITIONS
Function T=CREATE_TRANSITIONS(USERS, {ε_USER1,..., ε_USERS})
T={}
For user_id of USERS
        T_user_id ={}
        Being N the number of events generated by user_id ε={e_1, ...,e_N}
        For i=1 ... N-1
                T_user_id=CONCATENATE(T_user_id,((BTS(i),BTS(i+1)),(t(i),t(i+1))))
        T={T_user1,...,T_USERS}
        Return T
```

• Eliminate linear parallel interference cancellation effects.-

In an embodiment, this step focusses on dealing with the ping-pong effect inherently present in telecommunication networks. The ping-pong effect is defined as a circular handover between a pair of cells not caused by the actual mobility of the user but by the own communication network. Typically, the ping-pong effect occurs mainly because a phone is in between areas of coverage of different BTSs or that traffic is rerouted due to high demand in one of the towers of the network. In general, the ping-pong effect increases the times of handover and thus the loading of the network. If focused on mobility, the ping-pong effect adds extra movements that are not real but just a collateral effect of the network. In order to avoid considering movements that are not real, the method applies an algorithm over T that ignores reciprocal transitions between neighboring cells in a short time, interpreted as a period of time that implies a speed between BTS towers not possible for human movement. Algorithm 2 presents how to eliminate from the set of transactions T the ones generated by a ping-pong effect.

In Algorithm 2, MINIMUM_TIME is a constant that defines a movement not possible for a human due to the speed, and as a result has been caused by a collateral effect of the network. Although it is possible to define the constant depending on the distance of the BTSs considered and a concept of maximum speed, in the majority of cases, due to the fact that these transitions are caused by the network, considering MINIMU_TIME in the order of 5s applies the filter to any type of geographical structure. Fig. 2 presents an example of how the ping pong effect affects the mobility of a given user and how eliminating the effect changes the actual mobility.

```
Algorithm 2: ELIMINATION OF PING PONG EFFECT
Function T=ELIMINATE_PINGPONG(USERS, T={T_user1,...,T_USERS})
For each user of USERS


        For each set of transitions T of user
          Being M the number of transitions
                For i=1...M-1
                        If T_i(BTS_1)=T_i+1(BTS_2) AND T_i(BTS_2)=T_i+1(BTS_1)
                                AND T_i+1(t_2)-T_i+1(t_1)<MINIMUM_TIME
                        THEN
                        Delete T_i+1 from T
        Return T
```

• Calculate total distance travelled.-

In an embodiment, after the above interference is eliminated, the invention identifies the set of user_id that have actually travelled a distance that could correspond with travelling by car, in order to avoid movements that are done with other transportation means (including walking). As a result, in this step the method requires that the total distance travelled is above MIN_KM, where the total distance is obtained as the sum of the distance between the pairs

(BTS$_1$, BTS$_2$) of each transition. Algorithm 3 presents the steps to filter the mobility of the users that do not comply with that requirement, where DISTANCE is a function that obtains the physical distance between two points in space. That distance is particularly obtained per day.

```
Algorithm 3: TOTAL_DISTANCE
Function USERS=TOTAL_DISTANCE(USERS, T={T_user1,...,T_USERS})
For each user of USERS
    TOTAL_DISTANCE=0
    For each set of transitions T of user
        Being M the number of transitions
        For i=1...M
                    TOTAL_DISTANCE=TOTAL_DISTANCE+
DISTANCE(T_i(BTS_1),(T_i(BTS_2))
                IF TOTAL_DISTANCE<MIN_KM delete user
    Return (USERS)
```

• Calculate Transition Speed.-

The previous step has eliminated the users in which there was no traveling by car involved. For the users that pass the filter, the method needs to identify which transitions actually correspond to a car. In order to do so, for the elements that comply with the previous filter, the method also requires that the speed needs to be within a range [*minSpeed, maxSpeed*]; where the speed is computed as the quotient between the distance from BTA$_1$ to BTS$_2$ and the time taken to travel such distance. Algorithm 4 implements the filtering of the elements of T that do not correspond to traveling by car.

In algorithm 4, the *maxSpeed* filter is intended to filter other types of mobility that are done with other transportation means such as planes or high-speed trains. Also filters errors in the network in which a user is assigned to a distant BTS tower. The *minSpeed* filter is designed to eliminate transitions done walking, or in general that do not correspond with a car. Note that while the previous steps of the method applied to the complete distance between the first and the last set of transitions, this filter is applied to each individual transition, so it is possible that some pairs are filtered and some are not. This represents the fact that some of the mobility of the day can be done by car but the rest by other transportation means.

```
Algorithm 4: TRANSITION_SPEED
Function T=TRANSITION_SPEED(USERS, T={T_user1,...,T_USERS})
For each user of USERS
    For each set of transitions T of user
        Being M the number of transitions
            For i=1...M
                IF DISTANCE(T_i(BTS_1),(T_i(BTS_2))/(T_{i+1}-T_i)>maxSpeed OR
                    DISTANCE(T_i(BTS_1),(T_i(BTS_2))/(T_{i+1}-T_i)<minSpeed
                Delete transition i from T
    Return T
```

• Identify transitions over Link Envelopes.-

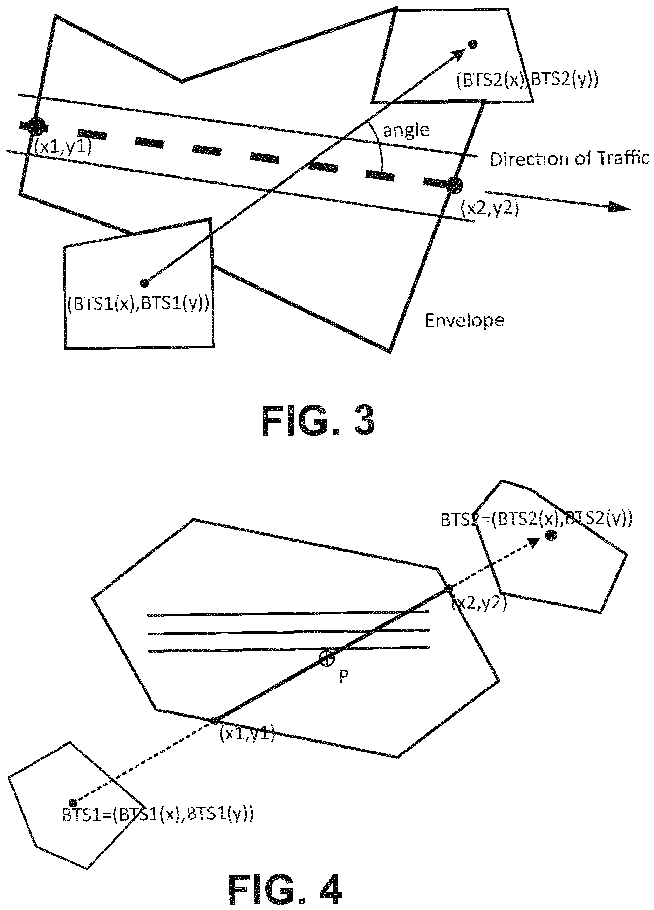

Once the set of transitions of each user that correspond to a car movement has been identified, the method only considers those transitions for which the segment between the two cells (identified by the ordered geolocation of the corresponding BTS towers) crosses the envelope of a link of the road network. Fig. 3 presents an example in which a transition defined by the segment between (BTS1, BTS2) crosses the envelope of the corresponding road link. The set of transitions that cross over the envelope of each link are assigned to that particular road link. There are three possible cases of how a transition can cross the envelope of a link: the transition is inside the link; the transition is from a cell outside the link to one inside (or the opposite); and the transition is between two cells outside of the envelope of the link. Fig. 3 presents an example in which the envelope of the link is crossed by a transition defined by two BTSs external to the envelope. In any case, the three cases can be solved with the same algorithm.

The problem of identifying which transitions cross an envelope, formally can be presented as to identify if the line that forms the transition using the corresponding BTS locations, expressed as y=ax+b, intersects the polygon that forms the envelope of the road link. For that, the method tests for mutual intersection between each edge of the polygon (envelope) and the line segment (transition). To test whether the line intersects an edge of the envelope, the invention first defines the function f(x,y)=y-ax-b. By applying the function to each vertex of the envelope, the method identifies if the line (transition between BTSs) intersects the envelope by focusing on the sign of the value returned by f(x,y): if it changes between a pair of adjacent vertices, the line intersects the edge of the envelope connecting those vertices and thus the envelope itself. There is one special case, which is that the transition forms a vertical line. In this case the method needs to check the x value of all vertices. If some are left and some are right of the line, the line intersects the polygon. Although it is potentially a possibility, it is difficult to find a transition that forms a vertical line when dealing with envelops of a road network and transitions defined by cell phones.

The algorithm to assign transitions to links considers the set of transitions T obtained from the previous steps of the method and the set of envelopes E, and tests which envelope is crossed by which transition. If a transition crosses an envelope, it will be associated to that envelope to obtain flow and average speed for that link. Algorithm 5 presents the mechanism used by the method to assign transitions of T to envelopes of E (and by extension to road links), with CROSSES a function that identifies if a transition crosses a convex hull. Note that not all transitions are necessarily associated with a link.

Algorithm 5: ASSIGN_TRANSITIONS_TO_LINKS

Function E=ASSIGN_TRANSITIONS_TO_LINKS(USERS, T={$T_{user1}, \dots, T_{USERS}$},

E={$E_1, \dots, E_m$},)

For user_id of USERS

For i=1 to t (number of transitions of user_id)

For j=1 to m (number of links)

If CROSSES($T_{user\_id}(i)$, E(j)) then assign $T_{user\_id}(i)$ to E(j)

Return E

• Identify Direction of Transition.-

Each link of the road network has one direction associated and, typically, there is another link that represents the opposite direction. Once each link has been assigned the set of transitions that represent cars crossing the envelope of that link, it is also advantageous to model the direction of the transition from the cell-phone data in order to validate if that transition actually happened because the car was moving in the road link, i.e. the method eliminates possible transitions that although are in the envelope do not correspond to cars moving in the link but in adjacent streets. To elucidate direction, the method considers the angle defined by the transition between BTSs and the link. Fig. 3 presents the angle that is formed by the link and the transition between BTSs. The angle is then defined by two vectors, one the transition between BTSs, ($BTS_1(x)$, $BTS_1(y)$, $BTS_2(x)$, $BTS_2(y)$), and the other the link, which is represented by the begging and end coordinates, ($x_1, y_1, x_2, y_2$). Considering that information, each vector can be represented as y=m1 X + B for the transition and y=m2 X +C for the road link, being m1 and m2 the slope of the BTS transition and the link respectively. The angle can then be obtained as:

$$\theta = \arctan \frac{m1 - m2}{1 + m1 m2}$$

A *maxAngle* value is then defined to determine the maximum angle valid to consider that the transition is actually in the link. If $\theta$< *maxAngle* then the transitions corresponds to a car moving in the direction of the link. If $\theta$>*maxAngle* then the transition although taking place in the envelope does not take place in the link and it is deleted from the set of transitions associated to the link of than envelope. Algorithm 6 presents the mechanism used to filter the transitions that do not comply with the *maxAngle* filter.

Algorithm 6: FILTER_BY_MAXANGLE
Function E=FILTER_BY_MAXANGLE(L={$L_1$,..., $L_m$}, E={$E_1$,..., $E_m$}, maxAngle)
    For i=1...m (number of links)
        Being T set of transitions associated to envelope $E_i$
        Being ($X_1$,$Y_1$,$X_2$,$Y_2$) the beginning and end of the $L_i$
        $M_2$=($X_2$-$X_1$)/($Y_2$-$Y_1$)
        For each t of T
            $M_1$=($BTS_2$(x)-$BTS_1$(x))/($BTS_2$(y)-$BTS_1$(y))
            $\theta = \arctan \frac{m1-m2}{1+m1m2}$
            If $\Theta$ > maxAngle THEN delete t from $E_i$
    Return E

• Time Window Identification.-

After assigning transitions to envelopes it can be identified to which time period within the time series of that link the information is assigned, i.e. where to modify in the temporal series the average speed and the total flow. Fig. 4 presents such an example in which a transition from BTS1 to BTS2 crosses the envelope of a link. Considering the information available in a transition, user_id is recorded in BTS1 at t1 and recorded in BTS2 at t2, the question is to identify when that user was in the road link to identify when to modify the flow and the average speed. Focusing on the part of the transition that is in the envelope, an intermediate point, for example the middle point (named P in Fig. 4) can be assumed to be the closest one to the link road, and as such, it identifies a better time approximation as when the user was in that point. In order to obtain P there are four different cases:

1. If both BTS1 and BTS2 are outside the envelope, then being (x1,y1) and (x2,y2) the points where the transaction intercepts the envelope, $P = (\frac{x2-x1}{2}, \frac{y2-y1}{2})$;

2. if both BTS1 and BTS2 are in the envelope, then

$$P = (\frac{BTS2(x)-BTS1(x)}{2}, \frac{BTS2(y)-BTS1(y)}{2});$$

3. if BTS1 is in the envelope and BTS2 is outside the envelope, then being (x2,y2) the point where the transaction intercepts the envelope of the link,

$$P = (\frac{x2-BTS1(x)}{2}, \frac{y2-BTS1(y)}{2})$$

4. if BTS2 is in the envelope and BTS1 is outside the envelope, then being (x1,y1) the point where the transaction intercepts the envelope of the link,

$$P = (\frac{BTS2(x)-x1}{2}, \frac{BTS2(x)-y1}{2})$$

Defining R as the percentage of the distance between BTS1 and P when compared to BTS1 and BTS2:

$$R = \frac{d(BTS1,P)}{d(BTS1,BTS2)}$$

The time t when user_id is in the road link can be obtained as:

$$t = t1 + R(t2 - t1)$$

After that, t will have to be discretized using the corresponding time window that was used in the Flow and Average Speed time series provided by the transportation institution. Considering d, the time used for discretizing the information (typically between 5 and 20 minutes), and assuming t and d are expressed in seconds, the index that indicates where to modify the information in the temporal series is defined as:

$$index = floor(\frac{t}{d})$$

Where floor rounds a number to the closest smaller integer. The element index is assigned to the corresponding transaction. Algorithm 7 presents the process to assign an index to each one of the transactions, with MIDDLE_POINT a function to calculate P as it was previously described. Note that the example in Fig. 4 has been given for transactions that cross over the envelope of a link. For the other possible situations the formulas for R, t and index are equally valid once P has been obtained.

Algorithm 7: ASSIGN_INDEX
Function E=ASSIGN_INDEX(L={$L_1$,…, $L_m$}, E={$E_1$,…, $E_m$}, d)
For i=1…m (number of links)
    Being T set of transitions associated to envelope $E_i$
    For each t of T
        P=MIDDLE_POINT(BTS1,BTS2, $E_i$)
        $R = \frac{d(BTS1,P)}{d(BTS1,BTS2)}$
        $t = t1 + R(t2 - t1)$
        $index = floor(\frac{t}{d})$
        Assign *index* to t
    Return E

• Update Flow and Average Speed.-

At this stage, the method can update for each road link the information for the time series of average speed and flow being created from NDCNC. Updating the flow information is as direct as just adding one to the corresponding time slot. Average speed consists on identifying the average speed during the crossing of the link and averaging it with the previous average speed available from the previous users. Algorithm 8 presents the steps to update both elements and produces flow ($F_{NDCNC}$) and average speed ($AS_{NDCNC}$) per link.

Algorithm 8: PRODUCE_F_AND_AS
Function (F-NDCNC, AS-NDCNC)=PRODUCE_F_AND_AS(L={$L_1$,…, $L_m$}, E={$E_1$,…, $E_m$})
For i=1…m (number of links)
    Being T set of transitions associated to envelope $E_i$
    F-NDCNC(i,*)=0
    AS-NDCNC(i,*)=0
    For each t of T
        F-NDCNC(i,index)=F-NDCNC(i,index)+1

$$AS\text{-}NDCNC(i,index)=(1/2)\ AS\text{-}NDCNC(i,index)+(DISTANCE(BTS1,BTS2)/(t2\text{-}t1))$$
$$Return\ F\text{-}NDCNC,\ AS\text{-}NDCNC$$

• Flow and Average Speed Regression.-

Up to now, the invention has presented a group of preprocessing and filtering steps of the original transitions in order to identify the set of elements that correspond with car movements. Nevertheless, any filtering has as the possibility of eliminating transitions that correspond to cars. Even more important, the fact that only the information provided by one telecommunication operator is considered introduces an important limitation to obtain flow and average speed. For example, if an operator has a level of penetration of X% (30% for example), in general the method will be able to capture only in the area of X% of the cars moving, which will affect directly the calculation of flow and speed. Also, that level of penetration is not homogeneous in a country and changes from zip code to zip code.

As stated before, in order to solve the previous limitations the invention uses a machine learning approach to correct it. Here is where the data provided by the Transportations institutions comes into play as it can be used as ground truth to train a mathematical model. The information provided by the Transportation institution consists on flow and average speed for each one of the links per day per time slot. This is the same data structure in which the method has constructed the temporal series of both variables obtained from NDCNC.

Considering F as the original flow for all links and F_CDCNC, the flow obtained by the method for all links, the next step is to identify a function $f$ that minimizes the difference between F and F_CDCNC. Formally, with n the number of elements in which the temporal series are divided:

$$minize \sum_{i=1}^{n} (F_i - (f(F\_CDCNC_i))$$

There are different solutions that can be considered to model f, for example, least square fitting (LSF). LSF assumes a linear relation between F and F_CDCNC and identifies f as:

$$f = a_0 + a_1 F\_CDCNC$$

The function obtained, f, linearly corrects the original value to minimize the difference between F and F_CDCNC. Note that other solutions to identify $f$ can be considered, for example Neural Networks or Support Vector Machines. In general a set of different techniques (least squares, neural networks, k-nn regression and support vector machines) can be applied and the method will consider the solution that minimizes RMSE (Root Mean Square Error). Note that other factors can be considered for deciding which one is the best solution, for example the interpretability of the results. The same approach can be used for average speed; although both variables no not need to use the same optimization method, different techniques can be used that will produce the corresponding function.

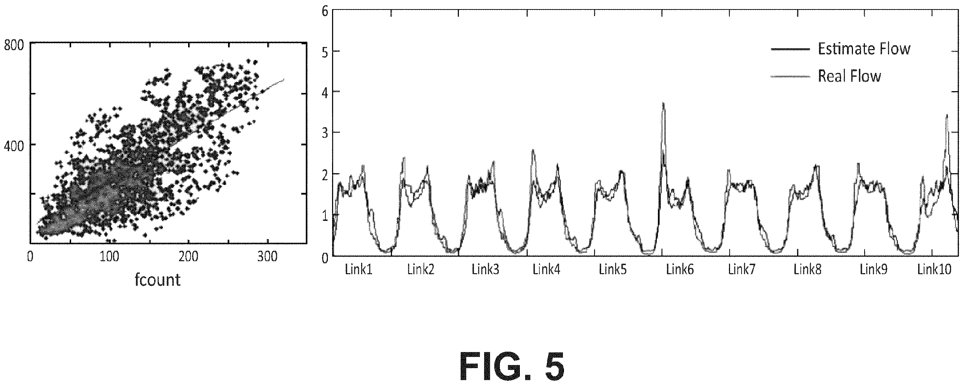

Fig. 5 (left) presents an example in which the method uses a linear regression with least square methods to approximate F (shown in the Y axis) with F_CDCNC (fcount). The function f obtained to transform one into the other can then be used to calculate the final flow obtained for each link from F_CDCNC. Fig. 5(right) presents the real flow F and the estimated flow obtained after applying the machine learning step during 24 hours for 10 links of the network in 15 minutes interval. The x-axis shows the temporal series for each link and the y-axis the value of the flow (as cars per minute). The average normalized difference between the original and estimated flows across the ten links is 0.83.

• Parameter recommendation.-

In an embodiment, present invention depends on a set of parameters to implement the preprocessing and filtering phases. These parameters are MINIMUM_TIME (for eliminating the ping-pong effect), MIN_KM (for identifying car trips), maxSpeed/minSpeed (to identify car transitions) and maxAngle (for identifying movements in the link of the road). The value of MINIMUM_TIME is network dependent, and it is recommended to be 5s, independently of the type of road the method is modeling.

In general, any road network has two main types of roads that behave differently, highways and roads. Highways are considered as links that have more than one lane in each direction, while roads only have one lane per direction.

As a consequence, the method should be applied independently for these two types of elements and each one should have its own model based on its own set of parameters. Depending on the road network a third type of roads can be considered, and a specific model generated for them: ring roads or beltways, i.e. a set of roads encircling a city.

The method recommends the following parameters:

- For Highways: MIN_KM= 80km; maxAngle= 45 degrees; maxSpeed= 300 km/h; minSpeed= 50 km/h
- For roads: MIN_KM=30km; maxAngle=45 degrees; maxSpeed= 200km/h; minSpeed= 20km/h
- For ring roads: MIN_KM= 20km; maxAngle= 45 degrees; maxSpeed= 300km/h; minSpeed= 20 km/h

These values have been obtained empirically by running different models and by looking for the best fit between the model and the ground truth. In general, the definition of these values will depend on each case on things like the speed limits of the road network (if any), the size of the network and the characteristics of the cars that use the network. Note that there is not a straight relation between maxSpeed/minSpeed and the speed limits of the particular roads being modeled as the speed captured by the transitions between towers does not follow the shape of the road but it is usually considerably higher than the actual distance travelled by the car.

Apart from these parameters, the flow and average speed calculation, depending on the machine learning technique applied, will have its own parameters that should be empirically defined by identifying the combination of parameters that produce the best RMSE. Also, in the flow and average speed calculation, the method recommends using just the links that have the maximum level of data quality and avoid any other links. The training approach is very sensitive to data quality and is recommended to ignore the flow information that does not have the maximum quality.

Therefore, the proposed method presents a mechanism that generates a mathematical model for the prediction of flow of average speed for the links of a road network from the passive information provided by a telecommunication network. The prediction capabilities can be implemented in three different ways:

- Prediction of the rest of the network: typically, in a road network, sensors are deployed in a limited part of the network, usually the links with more problems with traffic. This is done to limit the cost of deploying the sensors in the whole network. The information provided by the sensors can be used to create mathematical models for the prediction of speed and flow. These models can then be used to predict the values for the rest of the network where sensors have not been deployed.

- The information provided by transportation agencies has different levels of quality. This is defined by the sensors used (if any) to obtain the data for that particular link. The method could be applied to generate a model for F and AS only using as ground truth the links with high quality information. The model obtained can then be used to correct the links for which only low quality information was available.

- Prediction of future values of flow and average speed: once the mathematical models for speed and flow are available they can be applied to predict its corresponding values in the future with just the information provided by a cell phone network. This is useful for the development of products based on the analysis of traffic, without access to the sensors available in the road network.

The method here proposed can identify road links with high flow and low average speed on real-time and identify areas with traffic jams. This information can also be used to redistribute traffic to avoid links with low average speed (when compared to the speed limit) and high flow - which can be done by providing the information individually to each driver's cell phone or by information panels in the road network.

Flow and average speed can be presented as an information layer of maps in order to decide routes.

From NDCND events the proposed method can identify how many people use cars by identifying flow. As such, this information can then be used to optimize public transport networks in areas that have a lot of traffic and to measure the impact of those decisions by comparing the increase or decrease of traffic.

It should be noted that instead of NDCND different types of data can also be used for computing the commuting routes. For instance, GPS traces, CDR traces, hand-off patterns, network strength data that measures the signal strength from the near towers, or even location-based service data, such as check-in to venues in Foursquare, or geotagged tweets in Twitter. In any case, the datasets commented will have a lot of limitations when compared to the approach here proposed.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Non-volatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

**Claims**

1.  A computer implemented method for traffic estimation using passive network data, the method comprising:

    obtaining, by a first computer, for a specified period of time, a first group of information regarding passive cell-phone network data of a plurality of users over a cell-phone network, said passive network data being obtained from a plurality of base transceiver stations, BTSs, providing coverage to said cell-phone network;
    obtaining, by the first computer, from a second computer of a transportation institution, for said specified period of time, a second group of information regarding traffic metrics of a plurality of links of a roadway system, said second group of information being obtained as different time series for each of said links;
    overlapping, by the first computer, the first group of information with the second group of information, providing an overlapped map;
    identifying, by the first computer, on said overlapped map, an area of coverage of each of the links in view of the BTSs that provide coverage to the links and computing an envelope of each link based on the areas of coverage crossed by the link;
    computing, by the first computer, a mathematical model defining a flow and average speed of each of the links by identifying the number of users of the plurality of users that are travelling by car through said envelope of the link in that specified period of time; and
    updating, by the first computer, the computed mathematical model based on the obtained second group of information through a machine learning model.

**EP 3 839 917 A1**

2. The method of claim 1, wherein the specified period of time is at least one day.

3. The method of claim 1 or 2, wherein the passive cell-phone network data comprises a set of network-driven cell-phone network data events each one including an identifier of the BTS and a timestamp.

4. The method of any of previous claims, wherein the computing of the flow and average speed comprises computing transitions between two different coverage areas using the BTSs of each coverage area and a time at which the users move between the two coverage areas.

5. The method of claim 4, further comprising eliminating, by the first computer, linear parallel interference cancellation effects, including a ping-pong effect, occurring in the transitions by considering a minimum time interval defining a movement not possible for a human due to the speed and by ignoring the transitions lower than said minimum time interval.

6. The method of claim 1, wherein said identifying of the number of users travelling by car is performed by:

   - computing a total distance traveled by the users as the sum of the distance between the pairs of BTSs of each transition, and verifying that the total distance is above a distance threshold;
   - computing the speed of the users as the quotient between the distance from a first BTS of said pair to a second BTS of said pair and the time taken to travel said distance, and verifying that the computed speed is comprised between a max and min speed range.

7. The method of claim 4, 5 or 6, further comprising identifying, by the first computer, a direction of the transitions by:

   - computing an angle defined by the transitions between BTSs and the link as:

$$\theta = \arctan\frac{m1-m2}{1+m1m2},$$

   where $m1$ is the slope of the BTSs transition and $m2$ is the slope of the link; and
   - verifying that the computed angle is below a maximum acceptable angle.

8. The method of claim 4, further comprising:

   - identifying an intermediate point between the pair of BTSs of each transition;
   - computing a percentage of the distance between a first BTS and the intermediate point when compared to the first BTS and a second BTS as:

$$R = \frac{d(BTS1,P)}{d(BTS1,BTS2)}$$

   - using the computed percentage to compute a time in which the identified users pass through the intermediate point; and
   - computing an index value by discretizing the computed time to a given time window and adding the computed index value to each transition.

9. The method of claim 8, wherein the time given is comprised between 5 and 20 minutes.

10. The method of claim 1, wherein the machine learning model is a least square fitting model, a neural network, a support vector machine and/or a k-nn regression model minimizing a Root Mean Square Error of the computed mathematical model.

11. A system for traffic estimation using passive network data, comprising:

   a first computer;
   a second computer;

a plurality of base transceiver stations, BTSs, providing coverage to a cell-phone network,
wherein said first computer comprises a memory and one or more processors and is configured to:

- obtain, for a specified period of time, a first group of information regarding passive cell-phone network data of a plurality of users over the cell-phone network, the passive network data being obtained from the BTSs;
- obtain, for said specified period of time, from the second computer, a second group of information regarding traffic metrics of a plurality of links of a roadway system, said second group of information being obtained as different time series for each of said links;

overlap the first group of information with the second group of information, providing an overlapped map;
identify, on said overlapped map, an area of coverage of each of the links in view of the BTSs that provide coverage to the links and computing an envelope of each link based on the areas of coverage crossed by the link;
compute a mathematical model defining a flow and average speed of each of the links by identifying the number of users of the plurality of users that are travelling by car through said envelope of the link in that specified period of time; and
update the computed mathematical model based on the obtained second group of information through a machine learning model.

12. A non-transitory computer readable medium comprising code instructions that when executed by a computer system implement the method of any of claims 1 to 10.

# FIG. 1

(a)

(b)

# FIG. 2

**FIG. 3**

**FIG. 4**

**FIG. 5**

Europäisches
Patentamt

European
Patent Office

Office européen
des brevets

# EUROPEAN SEARCH REPORT

Application Number

EP 19 38 3132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VANESSA FRIAS-MARTINEZ ET AL: "Estimation of traffic flow using passive cell-phone data", PROCEEDINGS OF THE INTERNATIONAL WORKSHOP ON DATA SCIENCE FOR MACRO-MODELING, DSMM'14, 27 June 2014 (2014-06-27), pages 1-2, XP055692646, New York, New York, USA DOI: 10.1145/2630729.2630739 ISBN: 978-1-4503-3012-1 * the whole document * | 1-12 | INV. G08G1/01 G06N20/00 H04W4/00 H04W64/00 |
| A | US 2008/071465 A1 (CHAPMAN CRAIG H [US] ET AL) 20 March 2008 (2008-03-20) * paragraph [0004] - paragraph [0262] * | 1-12 | |
| A | EP 3 035 314 A1 (BE MOBILE NV [BE]) 22 June 2016 (2016-06-22) * paragraph [0001] - paragraph [0047]; figures 1-5 * | 1-12 | |
| A | WO 2016/029348 A1 (MICROSOFT TECHNOLOGY LICENSING LLC [US]; ZHENG YU [CN] ET AL.) 3 March 2016 (2016-03-03) * paragraph [0003] - paragraph [0082]; figures 1-9 * | 1-12 | TECHNICAL FIELDS SEARCHED (IPC) G08G G06N H04W |

The present search report has been drawn up for all claims

| Place of search | Date of completion of the search | Examiner |
|---|---|---|
| Munich | 11 May 2020 | Lupia, Sergio |

EPO FORM 1503 03.82 (P04C01)

## ANNEX TO THE EUROPEAN SEARCH REPORT
## ON EUROPEAN PATENT APPLICATION NO.

EP 19 38 3132

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2020

| Patent document cited in search report | | | Publication date | Patent family member(s) | | | Publication date |
|---|---|---|---|---|---|---|---|
| US 2008071465 | A1 | | 20-03-2008 | US | 2008071465 | A1 | 20-03-2008 |
| | | | | US | 2011173015 | A1 | 14-07-2011 |
| | | | | US | 2012150425 | A1 | 14-06-2012 |
| | | | | US | 2013289862 | A1 | 31-10-2013 |
| | | | | US | 2014149028 | A1 | 29-05-2014 |
| | | | | US | 2014149030 | A1 | 29-05-2014 |
| | | | | US | 2015094941 | A1 | 02-04-2015 |
| EP 3035314 | A1 | | 22-06-2016 | EP | 3035314 | A1 | 22-06-2016 |
| | | | | WO | 2016096226 | A1 | 23-06-2016 |
| WO 2016029348 | A1 | | 03-03-2016 | CN | 105723242 | A | 29-06-2016 |
| | | | | EP | 3186662 | A1 | 05-07-2017 |
| | | | | US | 2017285181 | A1 | 05-10-2017 |
| | | | | WO | 2016029348 | A1 | 03-03-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6577946 B2
- GB 2369709 A
- CN 1596425 A
- CN 104835320 B
- CN 101286269 A
- US 7650227 B2
- US 8494496 B2

**Non-patent literature cited in the description**

- **C.-Y. CHIANG et al.** Estimating instant traffic information by identifying handover patterns of UMTS signals. *Intelligence Transportation Systems, 14th Int. IEEE Conf.,* 2011, 390-395
- Cellular data meet vehicular traffic theory: location area updates and cell transitions for travel time estimation. **A. JANECEK et al.** Proceedings of the 2012 ACM Conference on Ubiquitous Computing. ACM, 2012, 361-370
- Road traffic estimation from cellular network monitoring: a hands-on investigation. **D. VALERIO et al.** Personal, Indoor and Mobile Radio Communications, 2009 IEEE 20th International Symposium on. IEEE, 2009, 3035-3039
- Traffic stream characteristics. **HALL, F. L.** Traffic Flow Theory. US Federal Highway Administration, 1996, 36